(19) **Europäisches Patentamt**
**European Patent Office**
**Office européen des brevets**

(11) **EP 1 991 607 B1**

(12) **EUROPEAN PATENT SPECIFICATION**

(45) Date of publication and mention
of the grant of the patent:
**05.08.2009 Bulletin 2009/32**

(51) Int Cl.:
***C08J 5/22*** (2006.01)

(21) Application number: **07713104.3**

(86) International application number:
**PCT/IB2007/000539**

(22) Date of filing: **07.03.2007**

(87) International publication number:
**WO 2007/102075 (13.09.2007 Gazette 2007/37)**

(54) **MANUFACTURING METHOD FOR ELECTROLYTE MEMBRANE, ELECTROLYTE MEMBRANE, AND FUEL CELL**

HERSTELLUNGSVERFAHREN FÜR ELEKTROLYTMEMBRAN, ELEKTROLYTMEMBRAN UND BRENNSTOFFZELLE

PROCÉDÉ DE FABRICATION DE MEMBRANE ÉLECTROLYTE, MEMBRANE ÉLECTROLYTE, ET PILE À COMBUSTIBLE

(84) Designated Contracting States:
**DE FR GB IT**

(30) Priority: **08.03.2006 JP 2006062527**
**27.12.2006 JP 2006352907**

(43) Date of publication of application:
**19.11.2008 Bulletin 2008/47**

(73) Proprietor: **Toyota Jidosha Kabushiki Kaisha**
**Toyota-shi, Aichi 471-8571 (JP)**

(72) Inventors:
• **TAKAMI, Masayoshi**
**Aichi-ken 471-8571 (JP)**

• **YOSHIDA, Toshihiko**
**Aichi-ken 471-8571 (JP)**
• **UEDA, Masahiro**
**Kyoto 600-8813 (JP)**
• **TOMISAKA, Yuri**
**Kyoto 600-8813 (JP)**

(74) Representative: **TBK-Patent**
**Bavariaring 4-6**
**80336 München (DE)**

(56) References cited:
**WO-A-03/096465** **JP-A- 2005 076 012**

**Description**

BACKGROUND OF THE INVENTION

1. Field of the Invention

The invention relates to a manufacturing method for an electrolyte membrane, and a fuel cell. Particularly, the invention relates to a manufacturing method for an electrolyte membrane, an electrolyte membrane, and a fuel cell that are chemically stable and capable of maintaining good proton conductivity.

2. Description of the Related Art

A fuel cell extracts electric energy generated through the electrochemical reactions in a membrane-electrode assembly (hereinafter, referred to as "MEA") that includes an electrolyte membrane, and electrodes (an anode and a cathode) disposed on both sides of the electrolyte membrane, via current collectors disposed on both sides of the MEA. Among fuel cells, a solid polymer fuel cell (hereinafter, referred to as "PEFC (Polymer Electrolyte Fuel Cell)") used in household cogeneration systems, motor vehicles, etc. is capable of operating at low temperatures. The PEFC exhibits high energy conversion efficiency, and can start up in short time, and is small in size and light in weight, and therefore is drawing attention as an optimal power source for electric motor vehicles or portable electric power sources.

The unit cell of the PEFC includes an electrolyte membrane, and an anode and a cathode which each have a catalyst layer. The theoretical electromotive force of the unit cell is 1.23 V. The electrochemical reactions in the PEFC progress as follows. That is, the hydrogen supplied to the anode separates into a proton and an electron on the catalyst that is contained in the catalyst layer of the anode. The protons from the hydrogen pass through the catalyst layer of the anode and the electrolyte membrane, and reach the catalyst layer of the cathode. The electrons from the hydrogen reach the catalyst layer of the cathode via an external circuit. Then, the protons and the electrons that have reached the catalyst layer of the cathode react with oxygen supplied to the catalyst layer, producing water. That is, to obtain electromotive force, it is necessary that protons pass through the electrolyte membrane. Therefore, the electrolyte membrane needs to have proton conductivity.

The electrolyte membrane is constructed of, for example, macromolecules made up of perfluorosulfonic acid-based polymers and the like, and has an ionic conductivity in a water-containing state. The electrolyte membrane made up of macromolecules as mentioned above has a problem of high cost due to its complicated synthesis process. The utilization of a hydrocarbon-based polymer has also been considered. However, this kind of macromolecule often has a heteroatom, a tertiary carbon, etc. in its skeleton, and therefore has a problem of being liable to be attacked by radicals and therefore liable to be damaged during operation of the PEFC. Therefore, the development of an electrolyte membrane capable of solving these problems is desired.

Various technologies related to the electrolyte membrane have been disclosed. For example, JP-A-2005-76012 discloses a technology related to a continuous manufacturing method for a functional membrane in which a functional polymer (a polymer made by polymerizing a monomer that has a sulfonic acid group, or the like) has been charged in the pores of a porous resin sheet (a porous polyethylene sheet or the like). According to this technology, a functional membrane can be continuously and efficiently obtained.

However, as disclosed in JP-A-2005-76012, for example, in a form in which a polymer made by polymerizing a monomer that has a sulfonic acid group is simply charged in the pores of a porous polyethylene sheet, the hydrophilic sulfonic acid group is eluted if the polyethylene sheet contacts water. Therefore, it is difficult to hold the sulfonic acid group within the electrolyte membrane that is used in the presence of water, resulting in a problem of difficulty in maintaining good proton conductivity.

SUMMARY OF THE INVENTION

It is an object of the invention to provide a manufacturing method for an electrolyte membrane, an electrolyte membrane, and a fuel cell that are chemically stable and capable of maintaining good proton conductivity.

A first aspect of the invention relates to a manufacturing method for an electrolyte membrane. In this manufacturing method, a resin composition is obtained by mixing a polyvinylsulfonic acid resin, a polyethylene resin, and an amine-based surfactant in a solvent, and the resin composition as the electrolyte membrane is formed.

The amine-based surfactant is not particularly limited as long as it is capable of reacting with the polyvinylsulfonic acid resin and therefore neutralizing the polyvinylsulfonic acid resin. Examples of the amine-based surfactant are n-tributylamine, etc. Furthermore, the solvent is not particularly limited as long as it is capable of dissolving the polyvinylsulfonic acid resin and the polyethylene resin. Examples of the solvent are chlorobenzene, etc.

In the first aspect of the invention, a fluid diameter of a molecule of the polyvinylsulfonic acid resin may be 300 Å or greater.

The "fluid diameter of a molecule of the polyvinylsulfonic acid resin is 300 Å or greater" concretely means that when the salt produced by the neutralization of the polyvinylsulfonic acid resin with the amine-based surfactant mixes with the polyethylene resin, the salt whose fluid diameter is 300 Å or greater and the polyethylene resin intermix to form a resin composition.

In the first aspect of the invention, the resin composition may be produced through an ion exchange in which a mixed solution is used, the mixed solution containing a polar organic solvent and a nonpolar organic solvent.

The "mixed solution" used for the ion exchange is not particularly limited in form as long as it contains a polar organic solvent and a nonpolar organic solvent. As a solvent that may be contained in the mixed solution, other than the polar organic solvent and the nonpolar organic solvent, an acidic solvent or the like may be cited as an example. Examples of the polar organic solvent contained in the mixed solution in the invention include dioxane, dimethyl acetamide, dimethyl formamide, dimethyl sulfoxide, etc. Furthermore, examples of the nonpolar organic solvent contained in the mixed solution include hexane, benzene, heptane, etc. Examples of the acidic solvent that may be contained in the mixed solution include hydrochloric acid, sulfuric acid, nitric acid, phosphoric acid, etc.

In the first aspect of the invention, a ratio between a mass A of the polar organic solvent contained in the mixed solution and a mass B of the nonpolar organic solvent contained in the mixed solution may be A:B = 5:95-40:60.

The aforementioned "A:B=5:95-40:60" means that $0.05X \leq A \leq 0.4X$ and $0.05X \leq A \leq 0.4X$, where X is the total mass of the polar organic solvent and the nonpolar organic solvent.

In the first aspect of the invention, the polar organic solvent is dioxane and the nonpolar organic solvent is hexane.

In the first aspect of the invention, the amine-based surfactant may include at least any one of n-tributylamine, triamylamine, tributylamine, tripropylamine, triallylamine, triethylamine, piperazine, piperidine, aziridine, morpholine, imidazole, indazole, oxazoline, pyridine, pyrimidine, triazine, triazole, aniline, benzylamine, melamine, hexamethylmelamine, indole, and quinoline, quinoxaline.

In the first aspect of the invention, the solvent may include at least any one of chlorobenzene, xylene, toluene, benzene, trichloroethylene, perchloroethylene, chlorobenzene, dichlorobenzene, trichlorobenzene, and hexafluoroisopropyl alcohol.

According to the first aspect of the invention, the polyvinylsulfonic acid resin is neutralized to form a salt by an amine-based surfactant, so that the salt and the polyethylene resin can be mixed homogeneously in the solvent. If a homogeneous mixing is thus obtained, then it is possible to fix sulfonic acid groups within the resin composition by removing the amine-based surfactant from the salt by ion exchange. The base skeleton of this resin composition is polyethylene, and therefore does not contain a heteroatom nor a tertiary carbon. Therefore, according to this aspect of the invention, it is possible to provide a manufacturing method for an electrolyte membrane that allows the use of a low-cost polyethylene resin and is able to maintain good proton conductivity.

It is possible to manufacture an electrolyte membrane that is even less likely to allow elution of sulfonic acid groups by adopting the form in which the polyvinylsulfonic acid resin whose molecule fluid diameter is 300 Å or greater and the polyethylene resin are mixed in the first aspect of the invention.

It is possible to provide an electrolyte membrane manufacturing method that is capable of manufacturing an electrolyte membrane that is high in ion conductivity by obtaining a resin composition through an ion exchange that uses a mixed solution containing a polar organic solvent and a nonpolar organic solvent in the first aspect of the invention.

It is possible to provide an electrolyte membrane manufacturing method that is capable of manufacturing an electrolyte membrane that is high in ion conductivity by setting a ratio between a mass of the polar organic solvent contained in the mixed solution and a mass of the nonpolar organic solvent contained in the mixed solution is 5:95 to 40:60 in the first aspect of the invention.

It is possible to provide an electrolyte membrane manufacturing method that is capable of manufacturing an electrolyte membrane that is high in ion conductivity by using the polar organic solvent which is dioxane and the nonpolar organic solvent which is hexane in the first aspect of the invention.

A second aspect of the invention relates to a manufacturing method for an electrolyte membrane. This manufacturing method includes a mixing step of obtaining a resin composition by mixing a polyvinyl sulfonic acid resin, a polyethylene resin, and an amine-based surfactant in a solvent, a drying step of drying the resin composition and vaporizing the solvent, and an ion exchange step of performing ion exchange so as to remove the amine-based surfactant.

In the second aspect of the invention, the manufacturing method may include a washing step of washing the resin composition with a pure water so as to remove a residual solvent included in the resin composition that has undergone the ion exchange step.

A third aspect of the invention relates to an electrolyte membrane. The electrolyte membrane comprises a resin composition produced by mixing a polyvinyl sulfonic acid resin whose molecule fluid diameter is 300 Å or greater and a polyethylene resin.

Examples of the "resin composition" include, among others, a material obtained as follows. That is, from a material obtained by mixing a salt having a molecule fluid diameter of 300 Å or greater which is produced by the neutralization of a polyvinylsulfonic acid resin caused by adding the polyvinylsulfonic acid resin and an amine-based surfactant (e.g., n-tributylamine or the like as mentioned above) into a solvent (e.g., chlorobenzene or the like as mentioned above), with a polyethylene resin added to the same solvent, the solvent is vaporized. After the vaporization, ion exchange is performed so as to remove the amine-based surfactant. That is, in this embodiment, the "polyvinylsulfonic acid resin whose molecular fluid diameter is 300 Å or greater" means that a polyvinylsulfonic acid resin is provided in a resin composition obtained by ion exchange of a material obtained by vaporizing the solvent from a material obtained by mixing the aforementioned salt whose molecule fluid diameter is 300 Å or greater and the polyethylene resin, and that the fluid diameter of the molecule of the polyvinylsulfonic acid resin is 300 Å or greater.

According to the third aspect of the invention, because the electrolyte membrane contains a resin composition formed by mixing a polyvinylsulfonic acid resin whose molecule fluid diameter is 300 Å or greater and a polyethylene resin, it is possible to provide an electrolyte membrane capable of maintaining good proton conductivity by curbing the elution of sulfonic acid groups. In addition, because the basic skeleton of this resin composition is polyethylene and does not contain a heteroatom nor a tertiary carbon, it is possible to provide a chemically stable electrolyte membrane.

A fourth aspect of the invention relates to a fuel cell comprising an electrolyte membrane manufactured by the manufacturing method according to the first aspect of the invention.

A fifth aspect of the invention is a manufacturing method for an electrolyte membrane that obtains a resin composition by mixing a polyvinylsulfonic acid resin, a polyethylene resin, and an amine-based surfactant in a solvent, and forms the resin composition as the electrolyte membrane.

A fifth aspect of the invention is an electrolyte membrane comprising a resin composition produced by mixing a polyvinyl sulfonic acid resin whose molecule fluid diameter is 300 Å or greater and a polyethylene resin.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 is a schematic diagram showing a simplified example of steps of a manufacturing method for an electrolyte membrane in accordance with an embodiment of the invention;

FIG 2 is a diagram showing results of measurement of proton conductivity; and

FIG 3 is a diagram showing results of measurement of the ion exchange capacity.

DETAILED DESCRIPTION OF PREFERRED EMBODIMENTS

Hereinafter, an electrolyte membrane and a manufacturing method for the electrolyte membrane (hereinafter, simply referred to as "manufacturing method") in accordance with an embodiment of the invention will be described concretely with reference to the drawings.

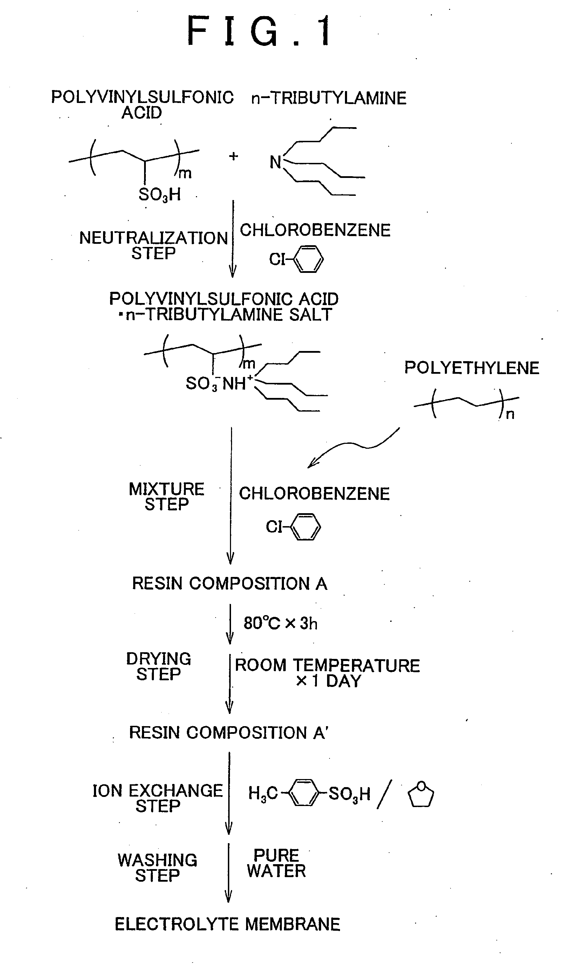

FIG 1 is a schematic diagram showing a simplified example of steps of a manufacturing method in accordance with an embodiment of the invention. In the manufacturing method of the invention in accordance with the embodiment shown in FIG 1, firstly a polyvinylsulfonic acid resin and an amine-based surfactant (n-tributylamine) are added to chlorobenzene placed in a reaction container, so that polyvinylsulfonic acid and n-tributylamine react to neutralize the sulfonic acid group of polyvinylsulfonic acid. Thus, a polyvinylsulfonic acid• n-tributylamine salt which is hydrophobic is obtained (neutralization step).

Next, a polyethylene resin is added to the polyvinylsulfonic acid•n-tributylamine salt (hereinafter, referred to as "salt") and chlorobenzene, and the mixing is stirred, so that a resin composition A in which the salt and the polyethylene resin are homogeneously mixed is obtained (mixing step).

After the resin composition A is made in this manner, the composition is applied to a substrate (e.g., glass or the like), and is dried for 3 hours in a temperature environment of 80°C, and then is held at room temperature for one day. Thus, a resin composition A' from which chlorobenzene has been vaporized is made (drying step).

It is to be noted herein that the resin composition A' has polyethylene and a salt, and the sulfonic acid group has been neutralized by n-tributylamine. Therefore, in this form, proton conductivity cannot be realized. Therefore, in order to remove n-tributylamine from the resin composition A', ion exchange is performed by immersing the resin composition A in benzene sulfonic acid THF solution (ion exchange step).

Then, in order to remove residual solvents, such as n-tributylamine or the like, which are still contained in the resin composition that has undergone the ion exchange step, the resin composition is washed with pure water (washing step). Thus, an electrolyte membrane in accordance with the embodiment of the invention is manufactured. As for the mixing ratio between the polyvinylsulfonic acid resin and the polyethylene resin, it is preferable to mix 10 parts by weight or more of the polyvinylsulfonic acid resin with respect to 100 parts by weight of the polyethylene resin, from the viewpoint of proton conductivity, and it is preferable that the amount of the polyvinylsulfonic acid resin be 90 parts by weight or less, from the viewpoint of chemical stability.

Thus, in the embodiment of the invention, when the polyvinylsulfonic acid resin and the polyethylene resin are mixed, the polyvinylsulfonic acid is first neutralized to form a salt, and then the salt is mixed with polyethylene. This is because polyvinylsulfonic acid is hydrophilic while polyethylene is hydrophobic, and in the state as it is, homogeneous mixing is difficult. However, if polyvinylsulfonic acid is neutralized with the amine-based surfactant to form a salt, this salt is hydrophobic and can be homogeneously mixed with polyethylene. Because the polyvinylsulfonic acid resin and the polyethylene resin have good affinity for chlorobenzene, they can be homogeneously mixed in the reaction container. Besides, the polyethylene resin and the polyvinylsulfonic acid resin (that is in the form of salt when mixed with the polyethylene resin) form a resin composition in a form in which the polyvinylsulfonic acid resin, in a spherical state, is homogeneously dispersed in polyethylene, and the polyvinylsulfonic acid resin is in a serially connected form. Because the polyvinylsulfonic acid resin is provided in such a form, an electrolyte membrane in accordance with the embodiment of the invention is able to curb the elution of sulfonic acid groups.

An electrolyte membrane in accordance with the embodiment of the invention produced through the aforementioned steps has a basic skeleton of polyethylene, the electrolyte membrane can be manufactured at low cost. Furthermore, because the basic skeleton does not have a heteroatom nor a tertiary carbon, a chemically stable electrolyte membrane can be obtained. In addition, because the basic skeleton does not contain a benzene ring, a soft electrolyte membrane can be manufactured.

In the invention, the fluid diameter of the polyvinylsulfonic acid resin contained in the electrolyte membrane is not particularly limited. However, it is preferable that the fluid diameter thereof be 300 Å or greater, from the viewpoints of effective prevention of the solution of the sulfonic acid group from the basic skeleton of polyethylene, and the like.

It is to be noted herein that the particle diameter (corresponding to the aforementioned "fluid diameter", which applies in the following description as well) of polyvinylsulfonic acid in an aqueous solution is found by the Einstein-Stokes equation (the following equation (1)).

$$\text{Particle diameter of solute} = RT/3nDN \qquad (1)$$

where R is the gas constant; T is absolute temperature; n is the viscosity of water; D is the diffusing constant of solute molecules; and N is the Avogadro's number.

If the particle diameter of a polyvinylsulfonic acid whose molecular weight is high (i.e., whose aqueous solution is high in viscosity) in an aqueous solution is greater than 300 Å, the polyvinylsulfonic acid cannot be a normal solute in a matrix of polyethylene, which does not dissolve nor swell at all in water in a state where the polyvinylsulfonic acid is constrained in a mesh-like configuration having an opening diameter of about 300 Å. Therefore, if the fluid diameter of the molecules of the polyvinylsulfonic acid resin is 300 Å or greater, it is considered that the polyvinylsulfonic acid will not be eluted as a solute although the swelling thereof with respect to water to some extent is conceived.

In this embodiment, the form of the process of removing the salt (n-tributylamine) from the resin composition A' is not particularly limited. For example, it is possible to adopt a form in which a mixed solution containing a polar organic solvent, a nonpolar organic solvent and an acidic solvent is used. If such a mixed solution is used for the ion exchange, the polar organic solvent compatibly mixes with a polyvinyl sulfonic acid polymer portion, that is, a hydrophilic polymer portion, and performs the function of removing intermolecular entanglement, and the nonpolar organic solvent compatibly mixes with a polyethylene portion, that is, a hydrophobic polymer portion, and performs the function of removing intermolecular entanglement, and the acidic solvent accelerates the permeation of the solvent into macromolecules. Thus, it becomes possible to manufacture an electrolyte membrane that is high in ion conductivity (=has good proton conduction performance). On the other hand, if the polar organic solvent is not contained, sufficient compatible mixing with the hydrophilic polymer cannot be secured, which is not preferable. If the nonpolar organic solvent is not contained, sufficient compatible mixing with the hydrophobic polymer cannot be secured, which is not preferable.

In this embodiment, in the case where the ion exchange is performed by using a mixed solution that contains a polar organic solvent and a nonpolar organic solvent, the composition of the mixed solution is not particularly limited. However, from the viewpoint of accelerating the compatible mixing with the hydrophilic polymer, it is preferable that the mass A of the polar organic solvent contained in the mixed solution be 0.05X or more, where X is the total mass of the polar organic solvent and the nonpolar organic solvent. Furthermore, from the viewpoint of preventing elution of the hydrophilic polymer, the mass A may be 0.4X or less. Furthermore, from the viewpoint of accelerating the compatible mixing with the hydrophobic polymer, it is preferable that the mass B of the nonpolar organic solvent contained in the mixed solution be 0.6X or more. From the viewpoint of preventing elution of the hydrophobic polymer, the mass B may be 0.95X or less. In particular, the masses of the polar organic solvent and the nonpolar organic solvent contained in the mixed solution may be A=0.4X and B=0.6X.

In the invention, as the polar organic solvent contained in the mixed solution, it is possible to use dioxane, dimethyl sulfoxide, dimethyl acetamide, dimethyl formamide, etc. Among these, dioxane may be used from the viewpoint of the balance between the solubility parameters of the solvent and the polymer. Furthermore, in the invention, as the nonpolar organic solvent contained in the mixed solution, it is possible to use hexane, heptane, benzene, etc. Among these, hexane may be used from the viewpoint of the balance between of the solubility parameters of the solvent and the polymer. The aforementioned "balance" means that the difference between the solubility parameter of the solvent and the solubility parameter of the polymer is not excessively small nor excessively large. If the difference between the two solubility parameters is excessively small, the polymer is completely dissolved, which is not preferable. If the difference between the two solubility parameters is excessively large, the polymer does not compatibly mix, which is not preferable. In addition, in the invention, as the acidic solvent contained in the mixed solution, it is possible to use hydrochloric acid, sulfuric acid, nitric acid, phosphoric acid, etc. Among these, hydrochloric acid, whose anions are small and whose ion exchange rate is great, may be used.

Furthermore, in the case where the mixed solution contains dioxane as a polar organic solvent, hexane as a nonpolar organic solvent, and hydrochloric acid as an acidic solvent, it is preferable that the ratios of the mass A of dioxane, the mass B of hexane, and the mass C of hydrochloric acid be A:B:C=40:60:50. The time of the ion exchange using the mixed solution may be 5 minutes or longer. If the ion exchange time is shorter than 5 minutes, the ion exchange does not sufficiently progress, and there is a risk of failing to secure a sufficient amount of functional groups that function as migration pathways of protons.

In an above-described form, n-tributylamine is used as an amine-based surfactant, and chlorobenzene is used as a solvent. However, this form does not limit the invention. Other examples of the amine-based surfactant that can be used in the invention include triamylamine, tributylamine, tripropylamine, triallylamine, triethylamine, piperazine, piperidine, aziridine, morpholine, imidazole, indazole, oxazoline, pyridine, pyrimidine, triazine, triazole, aniline, benzylamine, melamine, hexamethylmelamine, indole, quinoline, quinoxaline, etc. Other examples of the solvent that can be used in the invention include xylene, toluene, benzene, trichloroethylene, perchloroethylene, chlorobenzene, dichlorobenzene, trichlorobenzene, hexafluoroisopropyl alcohol, etc.

In addition, the electrolyte membrane manufactured by the aforementioned manufacturing method can be used as the electrolyte membrane included in a fuel cell.

With results indicated below regarding examples of the invention, the above-described electrolyte membrane in accordance with the embodiment of the invention will be further described in greater detail.

1. Protone Conductivity Measurement

1. 1. Making the Electrolyte Membrane

*1) Formation of Polymer Electrolyte Membrane*

10 g of a low-density polyethylene (LDPE), 1 g of polyvinylsulfonic acid, and 1.5 g of n-tributylamine were added to a reaction container containing 100 g of chlorobenzene. The mixing was heated to 80°C and was thoroughly stirred, to obtain a relatively transparent suspension. This suspension whose solid content was 10 wt% was used as a coating material (polymer electrolyte solution) for forming a membrane.

*2) Coating by Cast Method*

The polymer electrolyte solution prepared by the foregoing method was applied to a thoroughly-washed glass substrate in a bar-coating fashion by a bar coater. Then, in order to control the membrane thickness within the range between 50 and 100 $\mu$m, the spacer was set at 600 $\mu$m, and the applying rate was set at about 50 cm/min.

*3) Drying of Coat Membrane*

The coat membrane was held at room temperature for about 5 min, and was placed into a ventilation dryer at 60°C when the coating surface became smooth. The drying was continued for 2 days until no further reduction in mass was observed.

*4) Swelling Treatment of Samples for Measurement of Proton Conductivity*

An acid treatment was performed on the polymer electrolyte membranes obtained through the drying as described above in 5 different conditions (Conditions A to E) before the membranes were subjected to the measurement of proton conductivity. The polymer electrolyte membranes were cut into pieces of 1 cm×4 cm, to obtain proton conductivity measurement-purpose polymer electrolyte membranes (hereinafter, simply referred to as "electrolyte membranes" or "samples"). Then, the electrolyte membranes were dipped for one day in a 60°C-heated mixed solution that contained a predetermined concentration of an acid (Condition A: 10 wt% of hydrochloric acid; Condition B: 10 wt% of para-toluene sulfonic acid; Condition C: 15 wt% of para-toluene sulfonic acid; Condition D: 20 wt% of para-toluene sulfonic acid; and Condition E: 25 wt% of para-toluene sulfonic acid), with respect to 3 g of chlorobenzene/hexamethylphosphoamide (HMPA). While the electrolyte membranes were dipped, the mixed solution was stirred with a magnetic stirrer by using a rotator. After the samples taken out of the mixed solution were dipped in 3,g of HMPA at room temperature for 30 main, 30 g of pure water was added, and the samples continued to be dipped for another 30 min. While the samples were dipped in the pure water-added HMPA, the HMPA continued to be stirred with a magnetic stirrer by using a rotator. After being dipped in this manner, the samples were taken out, and then dipped in a dilute hydrochloric acid solution of pH 1 while the solution was being stirred. Then, after being taken out, the samples were washed with a large amount of water. Using pH test paper, the PH of the liquid after the operation was determined to be neutral. It was also recognized that hydrochloric acid was eluted from the samples (electrolyte membranes) to such a degree that does not affect the proton conductivity measurement by repeatedly performing the same operation as described above.

1. 2. Evaluation Method

Two opposite ends of an electrolyte membrane that has undergone the foregoing treatments are each clamped by a Pt electrode, and conductivity measurement was performed in a constant condition of temperature and humidity. The procedure is shown below.

*1) Cells for Measurement*

Pt plates were used as the electrodes for measurement. A sample and the Pt electrodes were fixed to a PTFE (polytetrafluoroethylene resin)-made cell having a window of 1 cm square. The distance between the Pt plate electrodes was 1 cm.

*2) Placement of Measurement Cell in Tester*

Each cell was placed in a tank of a small-size environment tester. A condition where the tank temperature of the small-size environment tester was at 85°C and the relative humidity thereof was 100%RH was set. However, because 100%RH was outside the controllable range of the small-size environment tester, the value obtained when the relative humidity value in a monitor display reached 100%RH was taken as a measurement value.

*3) Measurement*

Using an impedance analyzer (4194A, by YHP), the measurement was performed twice in a frequency band of 100 Hz to 1 MHz with the settings shown in Table 1 below. An average value of conductances at a frequency at which the capacitance of the measurement cell of a sample was minimum was taken as a measurement value (G [S]) of the sample. After the measurement, the membrane thickness (d [$\mu$m]) of the sample was measured with a micrometer. A value found by the following equation (2) was regarded as the proton conductivity ($\sigma$ [S/cm]) of the sample.

$$\sigma=(G/d)\times10000 \qquad (2)$$

| Measurement frequency | 100 Hz-1 MHz |
|---|---|
| Applied AC voltage | 0.04 Vrms |
| Number of times of averaging | 4 times |
| Integration time | 5 msec |
| Number of measurement points | 81 points |

1. 3. Results

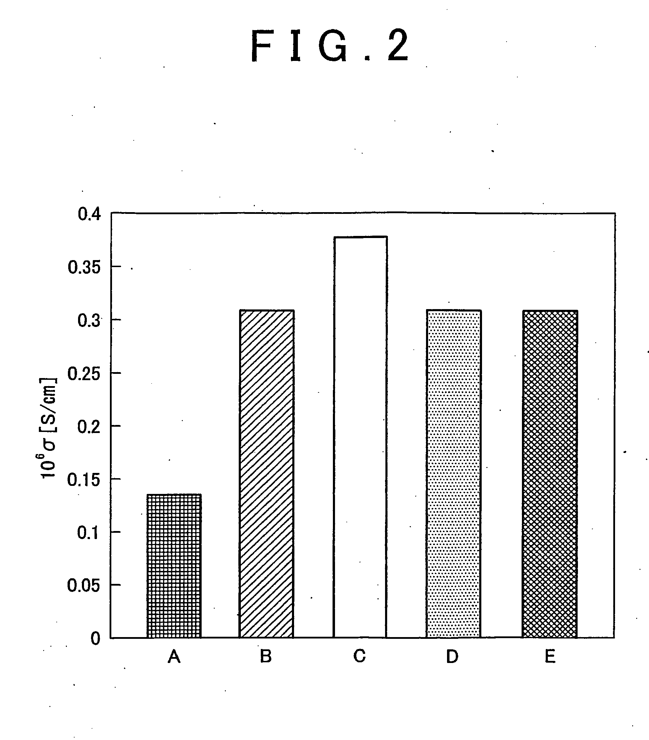

The proton conductivity in the membrane thickness direction of each of the samples (Samples A to E) made through the acid treatment under Conditions A to E was investigated. Results of the investigation are shown in FIG 2. The vertical axis in FIG 2 represents the proton conductivity ($10^6 \times \sigma$ [S/cm]) of each sample.

As can be seen from FIG 2, the proton conductivities of Samples A to E in the membrane thickness direction were less than $1 \times 10^{-6}$ [S/cm]. In the meantime, a surface of Sample A was covered with water, and the proton conductivity of the water-covered surface of Sample A was measured. The actual measurement value of the proton conductivity thereof was about $1.1 \times 10^{-4}$ [S/cm]. That is, it has been confirmed that the electrolyte membrane in accordance with the embodiment of the invention has good proton conduction performance. Furthermore, the aforementioned results confirm that the polyvinylsulfonic acid is disposed two-dimensionally or three-dimensionally within the electrolyte membrane.

2. Ion Exchange Capacity Measurement

2. 1. Making of Resin Composition

A polymer electrolyte membrane was manufactured as in the foregoing procedures of 1) Formation of Polymer Electrolyte Membrane, 2) Coating by Cast Method, and 3) Drying of Coat Membrane. A resin composition was made in substantially the same manner, except that the solution for the acid treatment in the swelling process of the samples for measurement of proton conductivity was changed to a solution shown in Table 2.

2. 2. Measurement of Ion Exchange Capacity

The ion exchange capacity was measured by a titration device. After the ion exchange was performed in a saturated NaCl aqueous solution for 24 hours, titration with a 0.02N NaOH aqueous solution was performed through the use of a phenolphthalein as an indicator (to pH=7). The test membranes were dipped in a 0.1N HCl aqueous solution for 2 hours. After the test membranes were rinsed with ultra-pure water, vacuum drying was performed for 1 hour in an environment of 60°C. After that, the dry membrane weight EW (IEC) per mole of the sulfonic acid group was calculated from results of weight measurement.

2. 3. Results

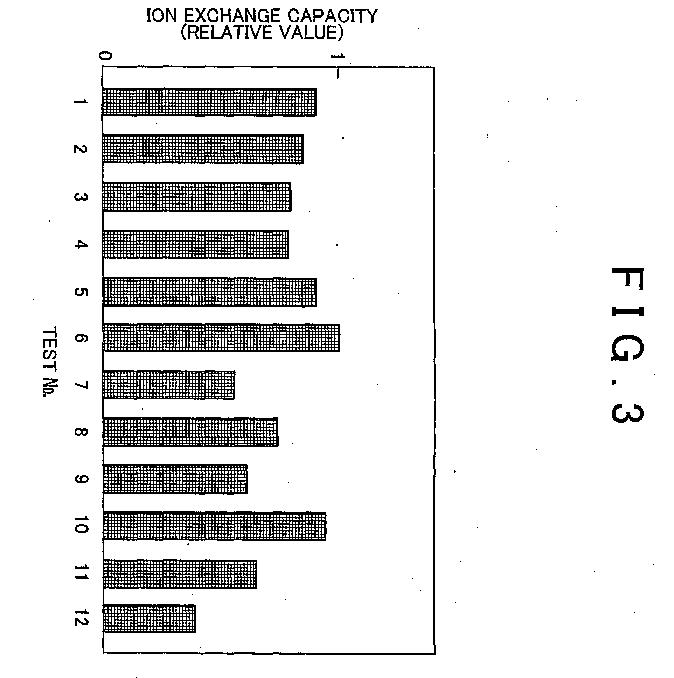

The compositions of the mixed solutions used for the ion exchange capacity measurement and the amounts of time needed for the ion exchange are shown in Table 2. Results of the measurement of the ion exchange capacity performed under the conditions shown in Table 2 (relative values with respect to the ion exchange capacity of the test No. 6 in Table 2 being defined as "1.0") are shown in FIG. 3. In FIG. 3, the vertical axis represents the relative values of ion exchange capacity, and the horizontal axis represents the test Nos. The results of the tests No. 1 and No. 2 shown in FIG. 3 are maximum values of the ion exchange capacity obtained from a plurality of times of performance of the ion exchange under the conditions of the tests No. 1 and No. 2 shown in Table 2.

| Test No. | | 1 | 2 | 3 | 4 | 5 | 6 | 7 | 8 | 9 | 10 | 11 | 12 |
|---|---|---|---|---|---|---|---|---|---|---|---|---|---|
| Composition of solution | Heptane [g] | 100 | 0 | 0 | 0 | 0 | 0 | 0 | 0 | 0 | 0 | 0 | 0 |
| | Hexane [g] | 0 | 100 | 95 | 90 | 80 | 60 | 50 | 25 | 0 | 60 | 60 | 60 |
| | Dioxane[g] | 0 | 0 | 5 | 10 | 20 | 40 | 50 | 75 | 100 | 40 | 40 | 40 |
| | Hydrochloric acid [g] | 50 | 50 | 50 | 50 | 50 | 50 | 50 | 50 | 50 | 50 | 50 | 50 |
| Time [min] | | 5 | 5 | 5 | 5 | 5 | 5 | 5 | 5 | 5 | 2.5 | 10 | 30 |

As can be seen from FIG 3, the maximum ion exchange capacity was obtained in the test No. 6, in which the ion exchange was performed for 5 min through the use of a mixed solution that contained 60 g of dioxane, 40 g of hexane, and 50 g of hydrochloric acid. In the tests No. 1 and No. 2, the relative values of the ion exchange capacity were 0.90 and 0.85, respectively. However, in the tests No. 1 and No. 2, the results of the ion exchange capacity measurement varied greatly, and thus the results shown in FIG. 3 had low reproducibility In the tests in which B≤0.5X where B is the mass of hexane, that is, a nonpolar organic solvent, and X is the total mass of the polar organic solvent and the nonpolar organic solvent contained in the mixed solution, specifically, the test No. 7 (B=0.5X), the test No.8 (B=0.25X), and the No.9 (B=0), the relative values of the ion exchange capacity were 0.55, 0.73, and 0.60, respectively, and the numbers of ion exchange groups capable of functioning as migration pathways of protons were small. On the other hand, in the tests in which 0.6X≤B≤0.95X, specifically, the tests No.3 (B=0.95X), No.4 (B=0.9X), No.5 (B=0.8X) and No.6 (B=0.6X), the relative values of the ion exchange capacity were 0.79, 0.78, 0.90 and 1.0, respectively, and the numbers of ion exchange groups capable of functioning as migration pathways of protons were large. In consequence, an electrolyte membrane having many ion exchange groups can be manufactured by performing the ion exchange through the use of a mixed solution of 0.6X≤B≤0.95X (and 0.05X≤A≤0.4X).

**Claims**

1.  A manufacturing method for an electrolyte membrane, comprising:

    a mixing step of obtaining a resin composition by mixing a polyvinylsulfonic acid resin, a polyethylene resin, and an amine-based surfactant in a solvent, and
    a formation step of forming the resin composition as the electrolyte membrane.

2.  The manufacturing method for the electrolyte membrane, according to claim 1, wherein a fluid diameter of a molecule of the polyvinylsulfonic acid resin is 300 Å or greater.

3.  The manufacturing method for the electrolyte membrane, according to claim 1 or 2, wherein the amine-based surfactant is capable of neutralizing the polyvinyl sulfonic acid resin by reacting with the polyvinyl sulfonic acid resin.

4.  The manufacturing method for the electrolyte membrane, according to claim 3, wherein the amine-based surfactant includes at least any one of n-tributylamine, triamylamine, tributylamine, tripropylamine, triallylamine, triethylamine, piperazine, piperidine, aziridine, morpholine, imidazole, indazole, oxazoline, pyridine, pyrimidine, triazine, triazole, aniline, benzylamine, melamine, hexamethylmelamine, indole, and quinoline, quinoxaline.

5.  The manufacturing method for the electrolyte membrane, according to any one of claims 1 to 4, wherein the solvent includes at least any one of chlorobenzene, xylene, toluene, benzene, trichloroethylene, perchloroethylene, chlorobenzene, dichlorobenzene, trichlorobenzene, and hexafluoroisopropyl alcohol.

6.  The manufacturing method for the electrolyte membrane, according to any one of claims 1 to 5, wherein the resin composition is produced through an ion exchange in which a mixed solution is used, the mixed solution containing a polar organic solvent and a nonpolar organic solvent.

7.  The manufacturing method for the electrolyte membrane, according to claim 6, wherein a ratio between a mass of the polar organic solvent contained in the mixed solution and a mass of the nonpolar organic solvent contained in the mixed solution is 5:95 to 40:60.

8.  The manufacturing method for the electrolyte membrane, according to claim 6 or 7, wherein the polar organic solvent is dioxane and the nonpolar organic solvent is hexane.

9.  A manufacturing method for an electrolyte membrane, comprising:

    a mixing step of obtaining a resin composition by mixing a polyvinyl sulfonic acid resin, a polyethylene resin, and an amine-based surfactant in a solvent;
    a drying step of drying the resin composition and vaporizing the solvent; and
    an ion exchange step of performing ion exchange so as to remove the amine-based surfactant.

10. The manufacturing method for the electrolyte membrane according to claim 9, further comprising a washing step of washing the resin composition with a pure water so as to remove a residual solvent included in the resin composition that has undergone the ion exchange step.

11. An electrolyte membrane comprising a resin composition produced by mixing a polyvinyl sulfonic acid resin whose molecule fluid diameter is 300 Å or greater and a polyethylene resin.

**12.** A fuel cell comprising an electrolyte membrane manufactured by the manufacturing method according to any one of claims 1 to 10.

**Patentansprüche**

1. Herstellungsverfahren für eine Elektrolytmembran, umfassend:

   einen Mischschritt des Erhaltens einer Harzzusammensetzung durch Mischen eines Polyvinylsulfonsäureharzes, eines Polyethylenharzes und eines Amin-basierten grenzflächenaktiven Stoffs in einem Lösungsmittel, und einen Bildungsschritt des Bildens der Harzzusammensetzung als die Elektrolytmembran.

2. Herstellungsverfahren für die Elektrolytmembran nach Anspruch 1, wobei ein Fluiddurchmesser eines Moleküls des Polyvinylsulfonsäureharzes 300 Å oder größer beträgt.

3. Herstellungsverfahren für die Elektrolytmembran nach Anspruch 1 oder 2, wobei der Amin-basierte grenzflächenaktive Stoff in der Lage ist, das Polyvinylsulfonsäureharz durch Reagieren mit dem Polyvinylsulfonsäureharz zu neutralisieren.

4. Herstellungsverfahren für die Elektrolytmembran nach Anspruch 3, wobei der Amin-basierte grenzflächenaktive Stoff zumindest eines aus n-Tributylamin, Triamylamin, Tributylamin, Tripropylamin, Triallylamin, Triethylamin, Piperazin, Piperidin, Aziridin, Morpholin, Imidazol, Indazol, Oxazolin, Pyridin, Pyrimidin, Triazin, Triazol, Anilin, Benzylamin, Melamin, Hexamethylmelamin, Indol, und Chinolin, Chinoxalin beinhaltet.

5. Herstellungsverfahren für die Elektrolytmembran nach einem der Ansprüche 1 bis 4, wobei das Lösungsmittel zumindest eines aus Chlorbenzol, Xylol, Toluol, Benzol, Trichlorethylen, Perchlorethylen, Chlorbenzol, Dichlorbenzol, Trichlorbenzol und Hexafluorisopropylalkohol beinhaltet.

6. Herstellungsverfahren für eine Elektrolytmembran nach einem der Ansprüche 1 bis 5, wobei die Harzzusammensetzung durch einen Ionenaustausch, bei welchem eine gemischte Lösung verwendet wird, hergestellt wird, wobei die gemischte Lösung ein polares organisches Lösungsmittel und ein unpolares organisches Lösungsmittel enthält.

7. Herstellungsverfahren für die Elektrolytmembran nach Anspruch 6, wobei das Verhältnis zwischen einer Masse des in der gemischten Lösung enthaltenen polaren organischen Lösungsmittels und einer Masse des in der gemischten Lösung enthaltenen unpolaren organischen Lösungsmittels 5:95 bis 40:60 beträgt.

8. Herstellungsverfahren für die Elektrolytmembran nach Anspruch 6 oder 7, wobei das polare organische Lösungsmittel Dioxan ist und das unpolare organische Lösungsmittel Hexan ist.

9. Herstellungsverfahren für eine Elektrolytmembran, umfassend:

   einen Mischschritt des Erhaltens einer Harzzusammensetzung durch Mischen eines Polyvinylsulfonsäureharzes, eines Polyethylenharzes und eines Amin-basierten grenzflächenaktiven Stoffes in einem Lösungsmittel; einen Trocknungsschritt des Trocknens der Harzzusammensetzung und Verdampfens des Lösungsmittels; und einen Ionenaustauschschritt des Durchführens eines Ionenaustausches, um so den Amin-basierten grenzflächenaktiven Stoff zu entfernen.

10. Herstellungsverfahren für die Elektrolytmembran nach Anspruch 9, ferner umfassend einen Waschschritt des Waschens der Harzzusammensetzung mit einem reinen Wasser, um so ein in der Harzzusammensetzung, die den Ionenaustauschschritt durchlaufen hat, enthaltenes restliches Lösungsmittel zu entfernen.

11. Elektrolytmembran, umfassend eine durch Mischen eines Polyvinylsulfonsäureharzes, dessen Molekülfluiddurchmesser 300 Å oder größer ist, und eines Polyethylenharzes hergestellte Harzzusammensetzung.

12. Brennstoffzelle, umfassend eine durch das Herstellungsverfahren nach einem der Ansprüche 1 bis 10 hergestellte Elektrolytmembran.

**Revendications**

1. Procédé de fabrication d'une membrane électrolyte, comprenant:

   une étape de mélange pour obtenir une composition de résine en mélangeant dans un solvant une résine d'acide polyvinylsulfonique, une résine de polyéthylène, et un agent de surface à base d'amine, et
   une étape de formation pour former la composition de résine comme étant la membrane électrolyte.

2. Procédé de fabrication de la membrane électrolyte, selon la revendication 1, dans lequel un diamètre fluidique d'une molécule de la résine d'acide polyvinylsulfonique est de 300Å ou plus.

3. Procédé de fabrication de la membrane électrolyte, selon la revendication 1 ou 2, dans lequel l'agent de surface à base d'amine est capable de neutraliser la résine d'acide polyvinylsulfonique en réagissant avec la résine d'acide polyvinylsulfonique.

4. Procédé de fabrication de la membrane électrolyte, selon la revendication 3, dans lequel l'agent de surface à base d'amine comprend au moins un composant quelconque parmi du n-tributylamine, triamylamine, tributylamine, tripropylamine, triallylamine, triéthylamine, pipérazine, pipéridine, aziridine, morpholine, imidazole, indazole, oxazoline, pyridine, pyrimidine, triazine, triazole, aniline, benzylamine, mélamine, hexaméthylmélamine, indole, et quinoléine, quinoxaline.

5. Procédé de fabrication de la membrane électrolyte, selon l'une quelconque des revendications 1 à 4, dans lequel le solvant comprend au moins un composant quelconque parmi du chlorobenzène, xylène, toluène, benzène, trichloréthylène, perchloroéthylène, chlorobenzène, dichlorobenzène, trichlorobenzène, et l'alcool d'héxafluoroisopropyle.

6. Procédé de fabrication de la membrane électrolyte, selon l'une quelconque des revendications 1 à 5, dans lequel la composition de résine est produite par un échange d'ions dans lequel une solution mélangée est utilisée, la solution mélangée contenant un solvant organique polaire et un solvant organique non-polaire.

7. Procédé de fabrication de la membrane électrolyte, selon la revendication 6, dans lequel un rapport entre une masse du solvant organique polaire contenu dans la solution mélangée et une masse du solvant organique non-polaire contenu dans la solution mélangée est de 5:95 /40:60.

8. Procédé de fabrication de la membrane électrolyte, selon la revendication 6 ou 7, dans lequel le solvant organique polaire est du dioxane et le solvant organique non-polaire est de l'hexane.

9. Procédé de fabrication d'une membrane électrolyte, comprenant:

   une étape de mélange pour obtenir une composition de résine en mélangeant dans un solvant une résine d'acide polyvinylsulfonique, une résine de polyéthylène, et un agent de surface à base d'amine;
   une étape de séchage pour sécher la composition de résine et vaporiser le solvant; et
   une étape d'échange d'ions pour exécuter un échange d'ions de sorte à retirer l'agent de surface à base d'amine.

10. Procédé de fabrication de la membrane électrolyte, selon la revendication 9, comprenant en plus une étape de lavage qui consiste à laver la composition de résine avec de l'eau pure de sorte à retirer le solvant résiduel inclus dans la composition de résine qui a subi l'étape d'échange d'ions.

11. Membrane électrolyte comprenant une composition de résine produite en mélangeant une résine d'acide polyvinylsulfonique dont le diamètre fluidique de la molécule est de 300Å ou plus et une résine de polyéthylène.

12. Pile à combustible comprenant une membrane électrolyte fabriquée par le procédé de fabrication selon l'une quelconque des revendications 1 à 10.

# FIG. 1

POLYVINYLSULFONIC   n-TRIBUTYLAMINE
            ACID

NEUTRALIZATION | CHLOROBENZENE
      STEP

POLYVINYLSULFONIC ACID
·n-TRIBUTYLAMINE SALT

POLYETHYLENE

MIXTURE  | CHLOROBENZENE
  STEP

RESIN COMPOSITION A

80°C × 3h

DRYING  | ROOM TEMPERATURE
  STEP  |        × 1 DAY

RESIN COMPOSITION A'

ION EXCHANGE | $H_3C$-⟨ ⟩-$SO_3H$ / ⬠
     STEP

WASHING  | PURE
  STEP   | WATER

ELECTROLYTE MEMBRANE

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005076012 A